# EUROPEAN PATENT APPLICATION

(11) **EP 3 276 326 A1**
(43) Date of publication of application: **31.01.2018**
(21) Application number: 16182041.0
(22) Date of filing: 29.07.2016
(51) Int. Cl.: G01M 9/08, G01M 15/14, B64D 15/00, B64D 15/12, B64D 33/02

(54) **CORE COWL FOR PRESSURIZED AIR DRIVEN TURBINE POWERED SIMULATORS HAVING ANTI-ICE TRAILING EDGE**

(71) Applicant: Airbus Operations GmbH, 21129 Hamburg (DE)
(72) Inventor: Berens, Martin, 21129 Hamburg (DE); Riekers, Uwe, 21129 Hamburg (DE); Heilmann, Jörg, 28325 Bremen (DE)
(74) Representative: LKGLOBAL Lorenz & Kopf PartG mbB Patentanwälte

(57) **Abstract**

An engine simulator (2) for wind tunnel models comprises a turbine (4) having an inlet (6) for a pressurized fluid and an outlet (8) for an expanded fluid, a core cowl body (10) arranged downstream from the turbine (4), the core cowl body (10) having a core cowl trailing edge (12), and an outer nacelle body (14) that at least partially envelopes the core cowl body (10) with the formation of a gap (16) and envelopes a fan (18), which is coupled with the turbine (4). The core cowl body (10) comprises at least one outer heat conducting material layer section (32) extending up to the core cowl trailing edge (12) and having a first thermal conductivity coefficient, and at least one inner heat insulating material layer section (34), having a second thermal conductivity coefficient. The first thermal conductivity coefficient is at least 100 times the second thermal conductivity coefficient.

## Description

### TECHNICAL FIELD

The invention relates to an engine simulator for wind tunnel models as well as a method for manufacturing a core cowl body of an engine simulator for wind tunnel models.

### BACKGROUND OF THE INVENTION

Aerodynamic wind tunnel testing of aircraft requires the creation of a detailed scale model of the aircraft to be tested, which is placed into a wind tunnel and subjected to an air flow. For consideration of geometric and aerodynamic impact of engines so called Turbine Powered Simulators (TPS) are used, which are attached to the model. Accurate thrust determination by means of gas path measurements of pressures and temperatures in the TPS bypass and core ducts is essential to separate the airframe loads from the overall loads acting on the model that are measured by a wind tunnel balance. Turbine Powered Simulators comprise an overall shape equivalent to a common turbofan engine installed in a nacelle and supported by a pylon. The setup comprises an inlet, in which a fan is placed to generate compressed air, a duct, as well as a single nozzle, or a set of two concentrically arranged nozzles, through which the air is exhausted. Relating to full scale turbofan engines, fan duct, fan nozzle or nozzles and fan air may be alternatively referred to as bypass duct, bypass fan nozzle or nozzles and bypass air respectively. The fan is coupled with a turbine, which in turn is coupled with a plenum chamber and a duct extending interior of the model and is connected to a source of pressurized air. By providing pressurized air to the turbine, the turbine rotates and drives the fan. The assembly of the turbine together with the pressurized air plenum chamber and the shaft supported by bearings is referred to as core. The expanded air exits the turbine via a separate duct and a core nozzle.

Through expansion of pressurized air in the turbine, the air may be cooled below dew point temperature, before it exits the nozzle. With a dew point of exemplarily -80°C hardly any ice will be created thanks to the very small remaining absolute water content. However, due to the cooled air flow, all components subjected to the cooled air exiting the nozzle will be cooled as well. This especially concerns a core cowl, which comprises a trailing edge, at which ice may be accumulated due to condensation of vapor and subsequent freezing of water originating from humid ambient air. Ice accretion influences the aerodynamic characteristics of the turbine nozzle and, consequently, influences the turbine nozzle velocity coefficient. The core thrust contribution is computed from first, the turbine mass flow rate measured accurately ahead of the turbine, second, the ideal jet velocity based on pressure and temperature measurements in the flow duct between turbine exit and core nozzle as well as the measured ambient pressure that is assumed to apply at the core nozzle exit station, and third, the nozzle velocity coefficient accounting for any non-ideal characteristics.

Thrust determination is based on the assumption that turbine nozzle velocity coefficients correlate with the operational state of the simulator. Varying amounts of accreted ice cannot be monitored such as to correlate it practically with the simulator operational state. Consequently, any uncontrolled variation of the turbine nozzle velocity coefficient will induce errors in the determined thrust. Apart from its effect on the axial thrust component, ice accretion also strongly affects any force component perpendicular to the nacelle axis.

US 8,806,929 B2 discloses an engine simulator for wind tunnel models, which comprises a turbine with an inlet for a pressurized fluid and an outlet for a relieved fluid, a flow-type body arranged downstream from the turbine, a jacket that at least partially envelopes the flow-type body with the formation of a gap, and at least two electrodes. A downstream end of the flow-type body is provided with a heater coating comprised of a matrix material that contains a conductivity additive and is connected with the electrodes for applying an electrical voltage for preventing ice formation on the trailing edge of the flow-type body.

### SUMMARY OF THE INVENTION

It is considered an object of the invention to provide an engine simulator for wind tunnel models, which comprises an alternate and/or improved means for preventing ice accumulation on flow components thereof.

This object is met by a system according to claim 1. Advantageous embodiments and further improvement are given in the sub-claims and the following description.

It is proposed an engine simulator for wind tunnel models comprising a turbine having an inlet for a pressurized fluid and an outlet for an expanded fluid, a core cowl body arranged downstream from the turbine, the core cowl body having a core cowl trailing edge and an outer nacelle body that at least partially envelopes the core cowl body with the formation of a gap and envelopes a fan, which is coupled with the turbine. The core cowl body comprises at least one outer heat conducting material layer section extending up to the core cowl trailing edge, the outer heat conducting material layer section having a first thermal conductivity coefficient; and at least one inner heat insulating material layer section having a second thermal conductivity coefficient, wherein the first thermal conductivity coefficient is at least 100 times the second thermal conductivity coefficient.

The engine simulator with the above-mentioned design is based on a turbine powered simulator, which aims at providing an as realistic as possible simulation of an engine-induced flow scenario in a wind tunnel simulation. A core part of the engine simulator is the turbine, the inlet of which is connected with a source of pressurized fluid, such as air. The turbine is designed to provide a rotation with a distinctly high rotational speed without much effort.

For driving the turbine, a pressurized air duct may be provided, which may extend from the inlet through other parts of the wind tunnel model, to which the engine simulator is attached, to a compressor or similar device outside the wind tunnel. Pressurized air flowing through the turbine and thereby expanding flows through the outlet of the turbine as well as the core cowl body and leads to a distinct core jet downstream the engine simulator.

The fan is mechanically coupled with the turbine through a central shaft or similar means. During the expansion of the pressurized air, the turbine rotates and thereby drives the fan, which conveys air from upstream the engine simulator and through the gap between the nacelle body and the core cowl body and passes the core cowl trailing edge. This fan jet resembles the bypass flow, which at least partially mixes with the core jet downstream the engine simulator and flows over the core cowl trailing edge.

Due to the distinct expansion of the pressurized turbine drive air during this process, the temperature of the core jet sinks. Depending on the pressure ratio over the turbine, as well as depending on the temperature of the pressurized air at the turbine inlet, the temperature of the core jet may be as low as -100°C or even less, which leads to a distinct cooling of the core cowl trailing edge, if the core cowl body was produced according to the prior art.

However, through providing the at least one outer heat conducting material layer section, which extends up to the core cowl trailing edge, this may partially be prevented. The heat conducting material layer section and the heat insulating material layer section selectively influence the temperature distribution on the core cowl body particularly in a region near the core cowl trailing edge. The rear end of the core cowl body, which comprises the at least one outer heat conducting material layer section, is partly wetted by a rather warm airflow produced by the fan at the outside and partly wetted by cold core jets on the inside. Heat from the warm fan air is transferred into and conducted through the at least one outer heat conducting material layer section, thereby producing a more homogeneous temperature distribution in the region near the core cowl trailing edge with small temperature gradients. Together with the at least one inner heat insulating material layer section the temperature at the core cowl trailing edge is less dependent on the cold core jet.

Through choosing materials with satisfying thermal conductivity properties as well as a suitable design, the temperature of the core cowl trailing edge may essentially remain above 0°C. Consequently, the formation of ice due to condensation and freezing at the core cowl trailing edge may reliably be prevented by passive means alone. In other words, the at least one outer heat conducting material layer section and the at least one inner heat insulating material layer section in combination lead to a selected anisotropy with regard to heat conduction and heat transfer, respectively, leading to ensuring the temperature staying above 0°C at the core cowl trailing edge.

The at least one outer heat conducting material layer section may be realized through a variety of measures. For example, the trailing edge region of the core cowl body may be equipped with an end cap made of metal, e.g. aluminum or another heat conducting material. The end cap may be manufactured separately and attached to the core cowl body. For the sake of maintaining the desired dimensions of the core cowl body, a core of the core cowl body may be made slightly thinner, while at the same time the thickness of the end cap should be chosen to be as small as possible.

As an alternative, the core cowl body may be made from a composite comprising a matrix material and reinforcing elements, such as fibers, wherein at the trailing edge region, additional heat conducting material particles, fibers, stripes, plates or other elements may be added in order to adjust the thermal conductivity coefficient as desired. These may include a metallic material or carbon based materials such as graphene or the like.

The at least one inner heat insulating material layer section may also be realized through various measures. For example, it may be a separate material layer, such as made from expanded polystyrene or a similar material with good thermal insulating characteristics. It should be taken care of providing a suitable flow surface quality for not worsening the flow characteristics. The inner heat insulating material layer section may therefore be coated with a suitable, e.g. plastic material. The at least one inner heat insulating material layer section may, however, also form an integral part of the core cowl body.

Depending on the detailed design of the engine simulator, the inner heat insulating material layer section may extend more or less to the core cowl trailing edge. To provide a suitable run-out region, it may be suitable to let the thickness of the inner heat insulating material layer section decrease in a downstream direction, such that its thickness at the core cowl trailing edge may be zero or almost zero. The run-out region may also be placed further forward of a trailing edge region, i.e. more upstream, such that a trailing edge of the inner heat insulating material layer section is in a distance to the core cowl trailing edge. In general it is desired to maintain a temperature of above 0°C on the surface of the core cowl body, which is in contact with the bypass flow. While it is preferred to form a rearwardly oriented surface of the core cowl trailing edge as well as a part of an inner annular region upstream of the core cowl trailing edge by the heat conducting material layer section itself, it may also be desired to let the heat insulating layer extend up to the core cowl trailing edge.

It is preferred that the heat conducting material layer section covers the whole annular, rearwardly directed surface of the core cowl trailing edge. Hence, a sufficient heat transfer at the core cowl trailing edge is possible to prevent the accretion of ice.

In a preferred embodiment, the first thermal conductivity coefficient is at least 1000 times the second thermal conductivity coefficient, and even more preferred at least 10.000 times. For example, copper has a thermal conductivity coefficient of 401 W/(m K), copper alloy CuPb1P of 350 W(m K), aluminum of 205 W/(m K), whereas e.g. a 2-component polyurethane foam may have a thermal conductivity coefficient of 0,03 W/(m K).

In an advantageous embodiment, the outer heat conducting material layer section comprises a first heat transfer coefficient and the inner heat insulating material layer section comprises a second heat transfer coefficient, wherein the first heat transfer coefficient is higher than the second heat transfer coefficient. The heat transfer coefficient expresses the ability of heat being transferred from outside a material into the respective material through a heat transfer, i.e. conduction, convection or radiation. The higher the heat transfer coefficient is, the better heat will be transferred into the respective material. It goes without saying that the lower the heat transfer coefficient is, the better the insulation characteristics are. By providing a larger heat transfer coefficient at the outer material layer section, warm fan air leads to a better heat transfer into the outer material layer section, whereas the cold core jet leads to a lower heat transfer at the inner side of the core cowl body, i.e. a better insulation. In the context of this invention, the heat transfer coefficient may be influenced by flow characteristics in or near the boundary layer of the respective material layer section as well as the surface structure of the respective material layer section.

In an advantageous embodiment, the core cowl body has a base structure made from a fiber reinforced composite material. The material may comprise a cotton fabric reinforced phenolic resin composite, which comprises good thermal insulating characteristics, favorable machining characteristics, an acceptable surface roughness after machining and a chemical resistance against turbo-machinery lubrication oil, acetone, etc. The base structure constitutes a frame or a core, onto which the additional heat conducting and insulating material layer sections are to be arranged.

To further improve the thermal characteristics of the core cowl body, an additional insulating layer may be arranged between the outer heat conducting layer and the inner heat insulating layer. This layer may simply consist of air through providing a structure that maintains a distance between the two material layer sections. Additionally, or alternatively, a foam or any other insulating filler may be arranged between the two material layer sections. Resultantly, the heat transfer from the outer material layer section to the inner material layer section is reduced.

In a still further advantageous embodiment, a heating device for at least partially complementary heating of the outer heat conducting layer section is provided. For example, the heating device may be placed in a trailing edge region of the core cowl body and is adapted for providing additional heat into the core cowl trailing edge. This may improve the engine simulator's capabilities of preventing ice accumulation at the core cowl trailing edge in particular boundary conditions, such as on hot days with ambient air used for the engine simulator fan having a high absolute humidity, which may lead to increased amounts of condensation water. The heating device itself may be realized through various different techniques.

Advantageously, the heating device is arranged upstream of the core cowl trailing edge. Here, sufficient space is available for introducing a heating device. Heat will then spread into the heat conducting material layer section until it inter alia reaches the core cowl trailing edge.

In an exemplary embodiment, the heating device comprises a heating foil or heating wire made from a metal attached to the outer heat conducting layer section with an electrical insulation in-between electrically conducting materials. The heating device may be attached to an inner side of the heat conducting material layer section or be integrated into it. The heating device may also be made by carbon fiber heating filaments integrated into the heat conducting material layer section and/or the core cowl body. The heating device may particularly be arranged in a trailing edge region to concentrate the heat emission into this space. The outer heat conducting layer section and/or a core cowl body core and/or a rearwardly oriented annular surface of the core cowl trailing edge may comprise an annular recess or rim, into which the heating foil or wire is inserted. In case such an arrangement is considered, the heating foil or heating wire may be fixated in the recess or rim through filling a remaining space with a suitable resin. In this regard, the heat conducting material layer section should cover the whole rearwardly oriented annular surface of the core cowl trailing edge. Further, the heating device may be provided with a voltage from a direct current or alternating current voltage source via suitable electrodes. Consequently, depending on the size of the cross-sectional surface as well as the overall length, which determine the electrical resistance, a current is generated in the heating device, which in turn leads to a dissipation of heat. The electrodes may be configured as metal bands. A metal band may comprise a very flat shape, which may also be integrated into the material of the core cowl body or which may easily be bonded thereto. Metal bands also allow to provide flexibly designed routes to other elements of the engine simulator or the wind tunnel model itself. Depending on the operational requirements, the heating device may not only provide an anti-icing function, with which ice accretion is inhibited while the system is already operating before ice formation starts, but may also provide a de-icing function, with which already accreted ice can be actively removed.

The outer heat conducting layer may additionally, if a heating device is used, be insulated to the bypass flow by an additional outer layer of insulation material. The heat conducting material layer section may be brought to a distinctly higher temperature through the heating device. This prevents heat loss into the bypass flow.

The engine simulator may further comprise a heat exchanging device located inside a bypass duct of the engine simulator and a heat transfer means coupled with the outer heat conducting layer section. The heat exchanging device may comprise a plate heat exchanger located inside the bypass duct, where air temperatures are normally higher than those after expansion at a fan nozzle. Hence, by utilizing the heat already created inside the engine simulator, the prevention of ice accumulation at the core cowl trailing edge may be improved. The heat transfer means may be realized through a variety of possible devices, which include metallic heat conducting means as well as more sophisticated heat pipes that potentially allow achieving higher heat transfer rates than any metallic heat conducting means.

Such a heat exchanging device may be placed at any other or additional location where heat may be drawn of. For example, heat pipes may extend from the outer heat conducting layer to the model engine pylon, comprising an air duct, which leads compressed turbine drive air which may have been heated by adequate means to temperatures higher than either ambient air or compressed bypass duct air temperatures.

In another exemplary embodiment, a complementary acoustic liner layout of the heat exchanger in the bypass duct may be provided, which is adapted to convert acoustic power into heat. Hence, even more heat may be harvested from a component of the engine simulator passively.

The trailing edge of the core cowl body may comprise a separation edge in line with an outer wall contour, which separation edge at least partially comprises a pointed cross-section. The cross section may comprise a protruding part, an undercut or may be angled in general, e.g. rectangular. Through providing a separation edge or sharp edges in general, avoiding ice accretion may be further improved. The separation edge may be an additional separation edge or may be realized through the shape of the trailing edge itself.

Still further, the engine simulator may comprise vortex generators upstream of the outer heat conducting layer section for increasing the heat transfer into the outer heat conducting layer section. The vortex generators may comprise one or more protruding elements, which interact with the flow in order to create vortices. These increase the heat flow from outside the outer heat conducting layer section and the outer heat conducting layer section.

For a similar reason, the engine simulator may comprise vortex generators upstream of the heat exchanging device for increasing the heat transfer into the heat exchanging device.

The invention further relates to a method for manufacturing a core cowl body for an engine simulator having an anti-ice trailing edge, the method comprising providing a core cowl body, attaching at least one heat conducting material layer section having a first thermal conductivity coefficient to an outer surface of the core cowl body such that the heat conducting material layer section extends up to a core cowl trailing edge, and providing a heat insulating material layer section having a second thermal conductivity coefficient at an inner surface of the core cowl body, wherein the first thermal conductivity coefficient is at least 100 times the second thermal conductivity coefficient. As stated above, the first thermal conductivity coefficient may be at least 1000 times or even at least 10000 times the second thermal conductivity coefficient.

In an advantageous embodiment, attaching the heat conducting material layer section comprises integrating at least one solid end cap made of a heat conducting material.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1 shows a turbine powered engine simulator in a schematic sectional view.
Fig. 2 shows a schematic, magnified view of a trailing edge region of the engine simulator core cowl showing heat flows.
Fig. 3a and b illustrate a partial section of the trailing edge region with an additional heating device.
Fig. 4 shows the engine simulator with an additional heat exchanging device in a sectional view.

### DETAILED DESCRIPTION OF EXEMPLARY EMBODIMENTS

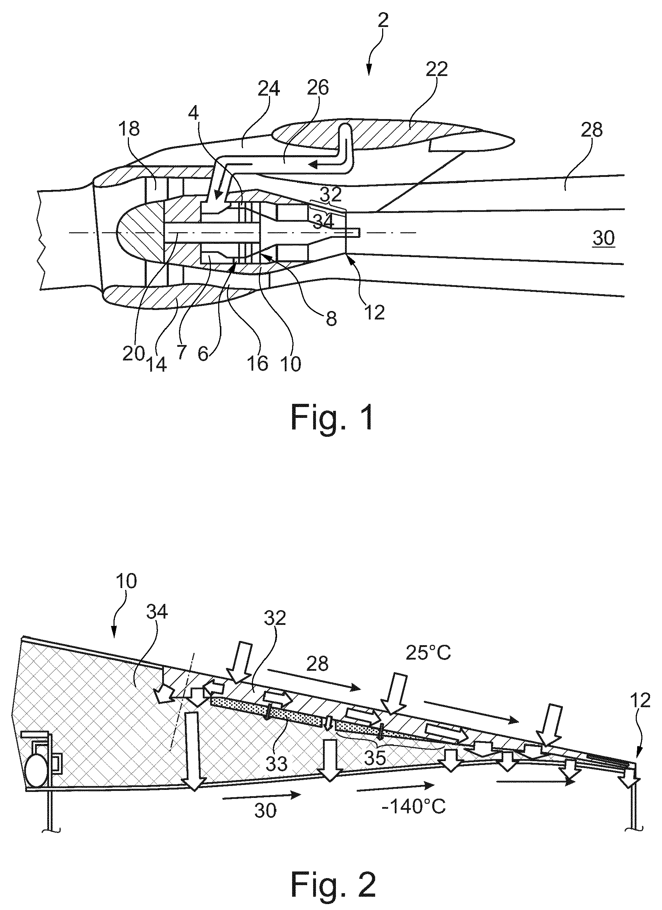

Fig. 1 shows a turbine powered engine simulator 2 having a turbine 4 with an inlet 6 for a pressurized fluid originating from an exemplarily annular plenum 7. Downstream of the turbine 4, and outlet 8 for an expanded fluid, a core cowl body 10 enveloping the turbine 4 and extending downstream the turbine 4, thereby creating a core cowl trailing edge 12, are present. An outer nacelle body 14 partially envelopes the core cowl body 10 and thereby creates a gap 16, through which a bypass flow 28 is created. The nacelle body 14 envelopes a fan 18, which in turn is coupled with the turbine 4 by means of a drive shaft 20.

For the sake of completeness, the engine simulator 2 is attached to a wing 22 of an aircraft model through a pylon 24, wherein a duct 26 extends from exemplarily inside the wing 22 through the pylon 24 towards the turbine 4 in order to provide pressurized air to drive the turbine 4. Air conveyed through the fan 18 leads to the creation of a bypass flow 28, which surrounds a central or core jet 30 created by pressurized air that is expanded in the turbine 4. In the region of the trailing edge 12, condensation of water may occur due to the low temperature of the central flow 30, which may have a temperature of -100°C or even less.

In a region extending from the core cowl trailing edge 12 in an upstream direction, an outer heat conducting material layer section 32 is present. Fig. 1 only shows a schematic view of the extensions of the outer material layer section 32 and is not to scale. Depending on various parameters of the engine simulator 2, the extension may be chosen to be larger or smaller.

At the same time, an inner, heat insulating material layer section 34 is present, which does not extend up to the core cowl trailing edge 12 but ends shortly ahead of it. The trailing edge is formed by the heat conducting material layer 32. Again, the indication in Fig. 1 is not to scale in regards of the inner material layer section 34. According to the above description, the outer heat conducting material layer section 32 supports the transfer of heat from the bypass flow 28 into the heat conducting material layer section 32, in order to provide an even temperature distribution up to the trailing edge 12. Further, due to heat insulating properties of the inner heat insulating material layer section 34, the cold core jet 30 is shielded from the trailing edge 12, in order to avoid a temperature drop below 0°C.

Fig. 2 provides a schematic view on the effects at the trailing edge region by means of heat flow arrows. The bypass flow 28 runs over the surface of the core cowl body 10, into which the heat conducting material layer section 32 is integrated. The bypass flow 28 may comprise a temperature of exemplarily 25°C, while a core flow 30 may comprise a temperature of as low as -140°C. Hence, a distinct temperature difference between an outer surface and an inner surface of the core cowl body 10 is present, which drives a heat transfer between the outer side and the inner side of the core cowl body 10.

The core flow 30 passes the core cowl trailing edge 12, where ice accumulation is prevented through maintaining a temperature of over 0°C through constantly transferring heat into the heat conducting material layer section 32 from the bypass flow. For this purpose, both the thermal conductivity coefficient and the heat transfer coefficient are chosen to be particularly high. The heat transfer coefficient may exemplarily be increased through flow influencing means, such as vortex generators mounted either upstream the heat conducting layer 32(not shown herein), increasing heat transfer from the bypass flow 28 into said heat conducting layer 32.

At the same time, for further reducing a cooling effect through the core flow 30, an additional heat insulation layer 33 is attached between the heat conducting material layer section 32 and the heat insulating layer section 34, wherein the thermal conductivity coefficient is chosen to be particularly low. This additional heat insulating layer section 34 may be realized by a foamed material or, alternatively, air.

With a run-out region 35 with decreasing thickness of the heat insulating material layer section 34 near the trailing edge 12 the insulating properties may be extended as far as possible to the trailing edge 12, without unduly worsening the flow characteristics. Resultantly, an equilibrium of temperatures at the core cowl trailing edge 12 is maintained at slightly over 0°C.

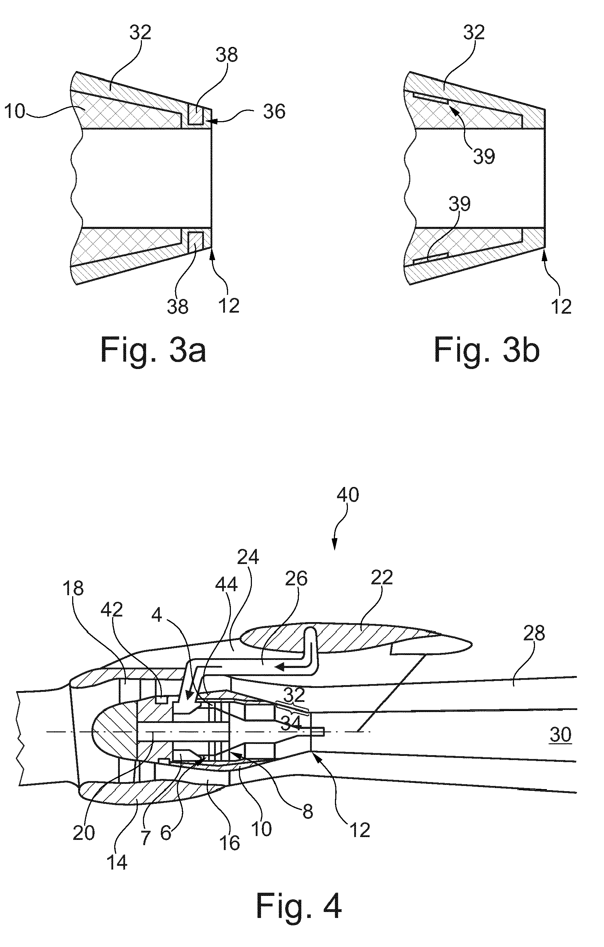

Fig. 3a shows a further exemplary embodiment based on Fig. 2, where an annular rim 36 in an outer surface of the core cowl body 10 is illustrated at a region directly at a trailing edge 12. The rim 36 is designed to receive a heating device 38. This may exemplarily be a heating foil, a heating wire or carbon fiber heating filament. The rim 36 may be placed in the heat conducting material layer section 32 or, as shown in Fig. 3a, in a base structure of the core cowl body 10. The heating device 38 may be useful particularly for hot and humid days, where a maximum of condensation occurs.

Additionally, or alternatively, as illustrated in Fig. 3b, an annular rim 39 may be placed on the core cowl body 10 in a region clearly upstream of the trailing edge 12 for receiving a heating device 38. Heat emanating from the heating device 38 spreads along the heat conducting layer 32 up to the trailing edge 12.

In both cases, i.e. Fig. 3a and 3b, the heat conducting layer section 32 extends up to the trailing edge 12 and may at least provide a cover of the whole rearwardly directed, annular surface of the core cowl body 10.

Fig. 4 finally illustrates a still further exemplary embodiment of an engine simulator 40 with a heat exchanger 42, which is designed as an annular heat exchanger 42, connected to heat transfer means 44. The heat exchanger 42 is arranged directly downstream of the fan 18 and in the core cowl body 10. The heat transfer means 44 extend into the direction of the core cowl trailing edge 12. They may be realized in the form of heat pipes. Resultantly, heat gathered by the heat exchanger 42 due to compression effects of fan air, is transferred to a position near the trailing edge 12.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. An engine simulator (2, 40) for wind tunnel models, comprising:
a turbine (4) having an inlet (6) for a pressurized fluid and an outlet (8) for an expanded fluid,
a core cowl body (10) arranged downstream from the turbine (4), the core cowl body (10) having a core cowl trailing edge (12),
an outer nacelle body (14) that at least partially envelopes the core cowl body (10) with the formation of a gap (16) and envelopes a fan (18), which is coupled with the turbine (4),
wherein the core cowl body (10) comprises at least one outer heat conducting material layer section (32) extending up to the core cowl trailing edge (12), the at least one outer heat conducting material layer section (32) having a first thermal conductivity coefficient; and at least one inner heat insulating material layer section (34) having a second thermal conductivity coefficient,
wherein the first thermal conductivity coefficient is at least 100 times the second thermal conductivity coefficient.

2. The engine simulator (2, 40) of claim 1,
wherein the at least one outer heat conducting material section (32) comprises a first heat transfer coefficient,
wherein the at least one inner heat insulating material section (34) comprises a second heat transfer coefficient,
wherein the first heat transfer coefficient is higher than the second heat transfer coefficient.

3. The engine simulator (2, 40) of claim 1 or 2,
wherein the core cowl body (10) has a base structure made from a fiber reinforced composite material.

4. The engine simulator (2, 40) of any of the previous claims,
comprising an additional insulating layer (33) between the at least one outer heat conducting layer section (32) and the at least inner heat insulating layer section (34).

5. The engine simulator (2, 40) of any of the preceding claims,
further comprising a heating device (38, 39) for at least partially complementary heating of the at least one outer heat conducting layer section (32).

6. The engine simulator (2, 40) of claim 5,
wherein the heating device (38, 39) is arranged upstream of the core cowl trailing edge (12).

7. The engine simulator (2, 40) of claim 5 or 6,
wherein the heating device (38, 39) comprises a heating foil or wire attached to an inner side of the outer heat conducting material layer section (32).

8. The engine simulator (2, 40) of one of the claims 5 to 7,
wherein the at least one outer heat conducting material layer section (32) is insulated to the bypass flow by an additional layer of insulation material.

9. The engine simulator (2, 40) of any of the preceding claims,
further comprising a heat exchanging device located inside a bypass duct of the engine simulator (2, 40) and a heat transfer means coupled with the at least one outer heat conducting material layer section (32).

10. The engine simulator (2, 40) of claim 9,
further comprising a complementary acoustic liner layout of the heat exchanger in the bypass duct, which is adapted to convert acoustic power into heat.

11. The engine simulator (2, 40) of any of the preceding claims,
wherein the core cowl body (10) comprises an additional separation edge in a region of the core cowl trailing edge (12) in line with an outer wall contour having an at least partially pointed cross-section.

12. The engine simulator (2, 40) of any of the preceding claims,
further comprising vortex generators upstream of the outer heat conducting material layer section (32) for increasing the heat transfer into the at least one outer heat conducting material layer section (32).

13. The engine simulator (2, 40) of claim 9,
further comprising vortex generators upstream of the heat exchanging device for increasing the heat transfer into the heat exchanging device.

14. Method for manufacturing a core cowl body for an engine simulator (2, 40) having an anti-ice trailing edge, the method comprising:
- providing a core cowl body (10),
- attaching at least one heat conducting material layer section (32) having a first thermal conductivity coefficient to an outer surface of the core cowl body (10) such that the heat conducting material layer section (32) extends up to a core cowl trailing edge (12), and
- providing a heat insulating material layer section (34) having a second thermal conductivity coefficient at an inner surface of the core cowl body (10),
wherein the first thermal conductivity coefficient is at least 100 times the second thermal conductivity coefficient.

15. The method of claim 14, wherein attaching the at least one heat conducting material layer section (32) comprises integrating at least one solid end cap made of a heat conducting material.
